# EUROPÄISCHE PATENTANMELDUNG

(11) **EP 1 095 912 A1**
(43) Veröffentlichungstag der Anmeldung: **02.05.2001**
(21) Anmeldenummer: 00123224.8
(22) Anmeldetag: 26.10.2000
(51) Int. Cl.: C02F 5/08, C02F 5/10, C02F 3/20

(54) **Verfahren zur Behandlung von Abwasser**

(30) Priorität: 29.10.1999 DE 19952135
(71) Anmelder: MESSER GRIESHEIM GMBH, 60547 Frankfurt (DE)
(72) Erfinder: Hertrampf, Joachim, 49497 Mettingen (DE); Riechers, Klaus, 47807 Krefeld (DE)

(57) **Zusammenfassung**

Es ist ein Verfahren zur Behandlung von Abwasser in einem Belebungsbecken unter Einsatz mindestens einer Druckbelüftungseinrichtung, die Ausströmöffnungen aufweist, bekannt, durch die ein sauerstoffhaltiger Gasstrom in das zu behandelnde Abwasser eingeleitet wird. Um hiervon ausgehend Betriebsstörungen, die auf Ablagerungen im Bereich der Ausströmöffnungen von Druckbelüftungseinrichtungen beruhen, zu verhindern, wird erfindungsgemäß vorgeschlagen, daß den Ausströmöffnungen ein Lösungsmittel zugeführt wird, in dem sich Ablagerungen im Bereich der Ausströmöffnungen chemisch lösen.

## Beschreibung

Die Erfindung betrifft ein Verfahren zur Behandlung von Abwasser in einem Belebungsbecken unter Einsatz mindestens einer Druckbelüftungseinrichtung, die Ausströmöffnungen aufweist, durch die ein sauerstoffhaltiger Gasstrom in das zu behandelnde Abwasser eingeleitet wird.

Bei der Erfindung geht es um die biochemische Reinigung von Abwässern durch aerobe (sauerstoffatmende) Mikroorganismen. Dabei werden im Abwasser suspendierte Stoffe und kolloidal sowie echt gelöste organische und anorganische Substanzen hauptsächlich durch mikrobielle Stoffwechselprozesse eliminiert oder in unschädliche Verbindungen umgewandelt. Für diese biologischen Abbauprozesse wird Sauerstoff benötigt, der den Mikroorganismen künstlich zugeführt werden muß.

Die Abwasserbehandlung durch aerobe Mikroorganismen erfolgt in verschiedenartigen Becken, die im folgenden insgesamt als 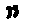 Belebungsbecken" bezeichnet werden. Für die Belüftung der Belebungsbecken werden vorallem Druck- und Oberflächenbelüfter eingesetzt. Bei den Oberflächenbelüftern wird in der Höhe des Abwasserspiegels Wasser aufgewirbelt, wodurch Luft mitgerissen und Sauerstoff vom Wasser aufgenommen wird. Bei der Druckbelüftung wird Luft meist in der Nähe des Beckenbodens durch poröses Material feinblasig, durch gelochte Rohre mittel- oder grobblasig oder durch offene Rohre grobblasig eingeblasen. Als Druckbelüftungseinrichtungen für feinblasige Druckbelüftung sind beispielsweise Kerzenbelüfter oder Tellerbelüfter zu nennen. Für eine besonders intensive Sauerstoff-Begasung und eine feine Verteilung des Sauerstoffs im Belebtschlamm, werden auch sogenannte 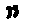 Begasungsmatten" eingesetzt, die aus flächig ausgelegten 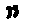 Schlauchströmern" bestehen. Bei den Schlauchströmern handelt es sich um dickwandige Schläuche mit vielen, sehr feinen Poren, die sich bei erhöhtem Innendruck öffnen und aus denen dann sauerstoffhaltiges Gas in Form fein verteilter Blasen in das Abwasser austritt. Da sich die feinen Poren der Schlauchströmer erst unter einem erhöhten Druck öffnen, wirken sie ähnlich wie Rückschlagventile und lassen kein Abwasser eindringen.
Durch hohe Sauerstoffkonzentrationen werden für den Ablauf der biologischen Reinigung besonders günstige Absetz-Eigenschaften des Belebtschlamms, hohe Abbauaktivitäten (kurze Reaktionszeiten), geringe Mengen an Überschußschlamm und eine Verringerung der Geruchsbelästigung durch geringe Abluftmengen erreicht.

Die oben näher erläuterten Abwasserreinigungsverfahren unter Einsatz von Druckbelüftungseinrichtungen im allgemeinen sind in 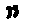 Abwassertechnik", Hosang und Bischof, 9. Auflage, Verlag B.G. Teubner, 1989 beschrieben. Ein Verfahren unter Einsatz von Begasungsmatten wird in der Produktinformationsschrift 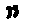 Gas aktuell 48, Seiten 21-24, Berichte aus Forschung und Technik" der Messer Griesheim GmbH (Ausgabe 9124/VII; 1994) erwähnt.

Bei den Druckbelüftungseinrichtungen kann es im Bereich der Ausströmöffnungen für das sauerstoffhaltige Gas in das Abwasser zu Ablagerungen, insbesondere zu kalkhaltigen Ablagerungen, kommen.

Die Ablagerungen setzen die Ausströmöffnungen mit der Zeit zu, so daß sich der Sauerstoffeintrag vermindert und der Druckverlust erhöht. Dies kann zu Betriebsunterbrechungen oder -störungen der Kläranlage führen. Besonders betroffen sind hierbei Druckbelüftungseinrichtungen für feinblasige Druckbelüftung.

Der Erfindung liegt die Aufgabe zugrunde, ein Verfahren anzugeben, das Betriebsstörungen, die auf Ablagerungen im Bereich der Ausströmöffnungen von Druckbelüftungseinrichtungen beruhen, verhindert.

Diese Aufgabe wird ausgehend von dem eingangs genannten Verfahren erfindungsgemäß dadurch gelöst, daß den Ausströmöffnungen ein Lösungsmittel zugeführt wird, in dem sich Ablagerungen im Bereich der Ausströmöffnungen chemisch lösen.

Bei dem Lösungsmittel handelt es sich um eine Substanz (oder ein Substanzgemisch), die eine chemische Auflösung von Ablagerungen im Bereich der Ausströmöffnungen bewirkt. Das Lösungsmittel wird den Ausströmöffnungen als Flüssigkeit, Aerosol oder Gas zugeführt, wobei flüssige Lösungsmittel und Aerosole auf die Ablagerungen unmittelbar einwirken können, während ein gasförmiges Lösungsmittel sich im Bereich der Ausströmöffnungen im Abwasser anreichert und so die chemische Auflösung der Ablagerungen in wässriger Lösung bewirkt. Vorhandene Ablagerungen werden dabei ganz oder teilweise beseitigt und der Bildung von Ablagerungen im Bereich der Ausströmöffnungen wird vorgebeugt.

Das erfindungsgemäße Verfahren vermeidet eine Entnahme der Druckbelüftungseinrichtung zum Zwecke der Beseitigung von Ablagerungen. Vielmehr können die Ablagerungen während des bestimmungsgemäßen Einsatzes der Druckbelüftungseinrichtung entfernt werden.

Das Lösungsmittel gelangt hierbei in das zu reinigende Abwasser. Art und Menge des eingesetzten Lösungsmittels sind daher so abzustimmen, daß das Abwasser und die darin enthaltenen Mikroorganismen möglichst nicht belastet werden.

Als besonders geeignet hat sich ein Lösungsmittel erwiesen, das eine Carbonsäure enthält. Ablagerungen bei der biologischen Abwasserreinigung lösen sich üblicherweise in Säuren, und insbesondere auch in derartigen Carbonsäuren, auf. Bei Carbonsäuren handelt es sich um organische Säuren, die insbesondere in kurzkettiger, aliphatischer, gesättigter Form für die im Belebungsbecken vorhandenen Mikroorganismen gut verträglich sind, und die auch im allgemeinen keinerlei Schadstoffe, wie Chlor, Schwefel oder Phosphor enthalten. Typische Vertreter sind beispielsweise Zitronensäure, Essigsäure oder Ameisensäure.

In dieser Hinsicht hat sich besonders der Einsatz von Ameisensäure bewährt. In den meisten Fällen sind kalkhaltige Ablagerungen Ursache für Verstopfungen der Ausströmöffnungen. Diese lösen sich in Ameisensäure besonders leicht und schnell auf.

Die Zufuhr des Lösungsmittels kann kontinuierlich erfolgen. Als besonders vorteilhaft hat sich jedoch eine Verfahrensweise erwiesen, bei der die Zufuhr des Lösungsmittels pulsweise in Zufuhr-Intervallen erfolgt. Bei dieser Verfahrensweise wird während der Zufuhr-Intervalle eine vergleichsweise hohe Konzentration an Lösungsmittel im Bereich der Ausströmöffnungen, und damit einhergehend eine entsprechend hohe Lösungsgeschwindigkeit der Ablagerungen beobachtet. In den Ruhezeiten ist die Zufuhr des Lösungsmittels zu den Ausströmöffnungen unterbrochen oder die Zufuhrrate wird vermindert. Dadurch ergibt sich im zeitlichen Mittel eine Lösungsmittel-Konzentration, die im Vergleich zur Lösungsmittel-Konzentration während der Zufuhr-Intervalle geringer ist und die daher eine entsprechend geringere Belastung des Abwassers bewirkt. Es ist nicht erforderlich, daß die Zufuhr-Intervalle gleich lange dauern. Als Beispiel seien Zufuhr-Intervalle mit einer Dauer im Bereich zwischen 10 min und 30 min genannt. Die Ruhezeit zwischen Zufuhr-Intervallen hängt von den konkreten Erfordernissen ab und kann im mehrerer Tage liegen.

Besonders bewährt hat sich eine Verfahrensweise, bei der das Lösungsmittels dem Abwasser mit dem sauerstoffhaltigen Gasstrom zugeführt wird. Dabei wird das Lösungsmittel im Gas verteilt und so allen Ausströmöffnungen gleichmäßig zugeführt. Beispielsweise wird das sauerstoffhaltige Gas als Trägergas verwendet, das mit einem gasförmigen oder flüssigen Lösungsmittel beladen und anschließend den Ausströmöffnungen zugeführt wird.

Eine weitere Verbesserung dieser Verfahrensweise ergibt sich, wenn das Lösungsmittel den Ausströmöffnungen in zerstäubter Form zugeführt wird, wobei der sauerstoffhaltige Gasstrom als Zerstäubungsmittel eingesetzt wird. Das Lösungsmittel bildet hierbei mit dem sauerstoffhaltigen Gasstrom ein Aerosol. Hierbei wird das flüssige Lösungsmittel unter Einsatz des sauerstoffhaltigen Gasstromes zerstäubt. Danach liegt das Lösungsmittel in Form feiner, im sauerstoffhaltigen Gasstrom suspendierter Flüssigkeitströpfchen vor, die mittels des sauerstoffhaltigen Gasstromes den Ausströmöffnungen zugeführt werden.

Zur Betriebssicherheit trägt bei, daß der Druckverlust des sauerstoffhaltigen Gasstromes in der Druckbelüftungseinrichtung gemessen wird, und die Zufuhr des Lösungsmittels in Abhängigkeit vom gemessenen Druckverlust geregelt wird. Als Regelung kommt eine Schwelllwertregelung in Frage, wobei oberhalb eines vorgegebenen Druckverlust-Grenzwertes Lösungsmittel eingespeist wird, oder eine Sollwertregelung, bei der Druckverlust auf einem vorgegebenen Sollwert gehalten wird, wobei die Zufuhrrate an Lösungsmittel zu den Ausströmöffnungen als Stellgröße dient.

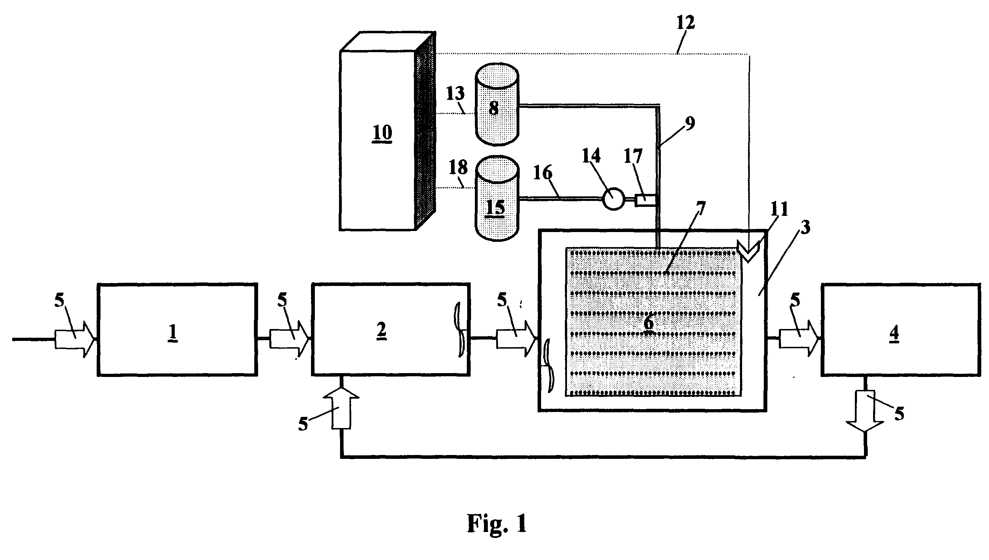

Nachfolgend wird die Erfindung anhand eines Ausführungsbeispiels und einer Zeichnung näher erläutert. In der Zeichnung zeigt in schematischer Darstellung
- **Figur 1**: eine Abwasser-Kläranlage mit einer zur Durchführung des erfindungsgemäßen Verfahrens geeigneten Druckbelüftungseinrichtung.

In **Figur 1** sind schematisch mehrere Becken (1 - 4) einer Kläranlage dargestellt, wie sie üblicherweise zur mikrobiellen Behandlung organisch belasteter kommunaler und industrieller Abwässer eingesetzt werden. Dabei handelt es sich um ein Vorklärbecken 1, ein Denitrifikationsbecken 2, das eigentliche Belebungsbecken 3 und ein Nachklärbecken 4. Die Fließbewegung des Abwassers durch die verschiedenen Becken (1 - 4) während der Behandlung ist durch die Richtungspfeile 5 gekennzeichnet, wobei die Wasser oder Abwasser führenden Leitungen durch durchgezogene, fette Linien dargestellt sind.

Zur Belüftung des Belebtschlamms im Belebungsbecken 3 ist am Beckenboden eine Begasungsmatte 6 montiert, über die technisch reiner Sauerstoff in das Abwasser eingebracht wird. Die Begasungsmatte 6 wird von sogenannten Schlauchströmern gebildet, die auf einem Rahmen flächig ausgelegt sind. Die Schlauchströmer bestehen aus dickwandigen Kunststoffschläuchen mit vielen, sehr feinen Poren 7, die in Figur 1 (abweichend vom Maßstab) vergrößert dargestellt sind. Die Begasungsmatte 6 ist über einen Zuleitungsschlauch 9 mit einem Sauerstofftank 8 verbunden.

Die Sauerstoffzufuhr zur Begasungsmatte 6 wird mittels einer Meß- und Regeleinrichtung 10 in Abhängigkeit von einem vorgegebenen Sollwert für den Sauerstoffgehalt im Abwasser des Belebungsbeckens 3 geregelt. Zur Messung des Sauerstoffgehaltes taucht eine Sauerstoff-Meßsonde 11 in den Belebtschlamm ein. Die von der Sauerstoff-Meßsonde 11 ermittelten Meßwerte werden über die Datenleitung 12 der Regeleinrichtung 10 zugeführt. In Abhängigkeit davon wird mittels der Regeleinrichtung 10 die Sauerstoffentnahme aus dem Sauerstofftank 8 geregelt (Regelverbindung 13).

Mit Hilfe einer Kolbenmembranpumpe 14 wird aus einem Vorlagebehälter 15 Ameisensäure (85 Vol.-%) über eine Entnahmeleitung 16 entnommen und mittels einer Zerstäubungsdüse 17 direkt in den Zuleitungsschlauch 9 eingedüst. Das Eindüsen der Ameisensäure erfolgt pulsweise oder kontinuierlich und wird mittels der Regeleinrichtung 10 geregelt (Regelverbindung 18).

Nachfolgend werden Ausführungsbeispiel für das erfindungsgemäße Verfahren anhand Figur 1 näher erläutert:

Vom Vorklärbecken 1 und Denitrifikationsbecken 2 gelangt das zu behandelnde Abwasser in das Belebungsbecken 3. Dort wird organische Substanz abgebaut und es findet die sogenannte Nitrifikation statt, bei der im Abwasser bzw. im Belebtschlamm des Belebungsbeckens 3 enthaltene Ammoniumverbindungen durch Mikroorganismen zu Nitraten oxidiert werden. Hierzu wird technischer Sauerstoff über die Begasungsmatte 6 in den Belebtschlamm eingetragen, indem dieser über die Poren 7 feinblasig ausströmt. Der Sauerstoffgehalt des Belebtschlamms wird fortlaufend mittels der Sauerstoffmeß-Sonde 11 gemessen und mittels der Regeleinrichtung 10 auf einem vorgegebenen O₂-Sollwert von etwa 1,5 mg/l gehalten.

Geregelt durch die Regeleinrichtung 10 wird in vorgegebener Dosierung und Dauer Ameisensäure in den Zuleitungsschlauch 9 eingedüst. Die zerstäubte Ameisensäure verteilt sich mit dem Sauerstoffstrom gleichmäßig über die gesamte Begasungsmatte 6 und löst beim Austritt aus den Poren 7 dort entstandene Kalkablagerungen auf. Außerdem bewirkt die Ameisensäure im Bereich der Poren 7 eine pH-Absenkung, die sich auch nach Beendigung des Eindüsens der Ameisensäure nur allmählich abbaut und so temporär die Entstehung neuer Kalkablagerungen verhindert.

### Beispiel 1:

Die Ameisensäure wird pulsweise in den Zuleitungsschlauch 9 eingedüst.
Pulsdauer, Ruhezeit und Dosierung der Ameisensäure sind konstant und werden durch die Regeleinrichtung vorgegeben. Die Pulsdauer beträgt 1 min, die Ruhezeiten dazwischen 5 min.
In einen Sauerstoffstrom von 50 m³ /min werden 1/h Ameisensäure eingedüst.

### Beispiel 2:

Die Ameisensäure wird pulsweise in den Zuleitungsschlauch 9 eingedüst.
Das Eindüsen von Ameisensäure erfolgt in Abhängigkeit vom Druckabfall in der Begasungsmatte 6 auf Basis einer Schwellwertregelung. Hierzu wird der Druck laufend gemessen. Bei einem Druckanstieg auf einen vorgegebenen Grenzwert, der bei einem Überdruck von 25 % liegt, wird Ameisensäure eingedüst.
Eindüsungsdauer (Pulsdauer) und Dosierung der Ameisensäure sind konstant und werden durch die Regeleinrichtung vorgegeben. Die Pulsdauer beträgt 1 min. In einen Sauerstoffstrom von 5 l/min werden 1 l/h Ameisensäure eingedüst.

### Beispiel 3:

In einen Sauerstoffstrom von 100 m3/h werden kontinuierlich 0,1 l/h Ameisensäure eingedüst.

## Patentansprüche

1. Verfahren zur Behandlung von Abwasser in einem Belebungsbecken unter Einsatz mindestens einer Druckbelüftungseinrichtung, die Ausströmöffnungen aufweist, durch die ein sauerstoffhaltiger Gasstrom in das zu behandelnde Abwasser eingeleitet wird, dadurch gekennzeichnet, daß den Ausströmöffnungen ein Lösungsmittel zugeführt wird, in dem sich Ablagerungen im Bereich der Ausströmöffnungen chemisch lösen.

2. Verfahren nach Anspruch 1, dadurch gekennzeichnet, daß als Lösungsmittel Carbonsäure eingesetzt wird.

3. Verfahren nach Anspruch 2, dadurch gekennzeichnet, daß als Carbonsäure Ameisensäure eingesetzt wird.

4. Verfahren nach einem der vorhergehenden Ansprüche, dadurch gekennzeichnet, daß die Zufuhr des Lösungsmittels in Zufuhr-Intervallen erfolgt.

5. Verfahren nach Anspruch 4, dadurch gekennzeichnet, daß die Dauer der Zufuhr-Intervalle im zeitlichen Mittel zwischen 10 min und 30 min betragen.

6. Verfahren nach einem der vorhergehenden Ansprüche, dadurch gekennzeichnet, das Lösungsmittels dem Abwasser mit dem sauerstoffhaltigen Gas zugeführt wird.

7. Verfahren nach Anspruch 6, dadurch gekennzeichnet, daß das Lösungsmittel den Ausströmöffnungen in zerstäubter Form zugeführt wird und daß das sauerstoffhaltige Gas als Zerstäubungsgas eingesetzt wird.

8. Verfahren nach einem der vorhergehenden Ansprüche, dadurch gekennzeichnet, daß der Druckverlust des sauerstoffhaltigen Gasstromes in der Druckbelüftungseinrichtung gemessen wird, und die Zufuhr des Lösungsmittels in Abhängigkeit vom gemessenen Druckverlust geregelt wird.
